(19) Europäisches Patentamt
European Patent Office
Office européen des brevets

(11) **EP 4 330 141 B1**

(12) **EUROPEAN PATENT SPECIFICATION**

(45) Date of publication and mention
of the grant of the patent:
**22.01.2025  Bulletin 2025/04**

(21) Application number: **22725306.9**

(22) Date of filing: **20.04.2022**

(51) International Patent Classification (IPC):
*A23F 5/10* (2006.01)     *A61J 3/07* (2006.01)
*B65B 29/00* (2006.01)    *B65B 51/22* (2006.01)
*B65B 29/02* (2006.01)

(52) Cooperative Patent Classification (CPC):
**B65B 29/022; A23F 5/10; A61J 3/074; B65B 29/00;
B65B 29/02; B65B 51/225**

(86) International application number:
**PCT/IT2022/050103**

(87) International publication number:
**WO 2022/229995 (03.11.2022 Gazette 2022/44)**

(54) **COMPACT ENCAPSULATING MACHINE FOR COFFEE BEANS**

KOMPAKTE VERPACKUNGSMASCHINE FÜR KAFFEEBOHNEN

MACHINE D'ENCAPSULATION COMPACTE POUR GRAINS DE CAFÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2021  IT 202100010664**

(43) Date of publication of application:
**06.03.2024  Bulletin 2024/10**

(73) Proprietor: **KAPHITECH S.R.L.**
**82030 Torrecuso (BN) (IT)**

(72) Inventors:
• **PALESTINI, Marco**
  **82030 Torrecuso (BN) (IT)**
• **CARDARELLI, Simone**
  **82030 Torrecuso (BN) (IT)**
• **RUDRAWADAYERMATH, Sandeep**
  **82030 Torrecuso (BN) (IT)**
• **BELLATTI, Vinayak**
  **82030 Torrecuso (BN) (IT)**

(74) Representative: **Garavelli, Paolo**
**A.BRE.MAR. S.R.L.**
**Consulenza in Proprietà Industriale**
**Via Servais 27**
**10146 Torino (IT)**

(56) References cited:
EP-B1- 3 312 101      WO-A1-2015/184670
WO-A1-2016/029355    CN-A- 108 357 700
ES-B1- 2 226 531      JP-A- 2015 528 695

**EP 4 330 141 B1**

**Description**

The present invention relates to a compact encapsulating machine for coffee beans, in accordance with the preamble to claim 1.

In particular, an automated, compact machine capable of producing coffee capsules from roasted coffee beans is illustrated. Document WO 2016/029355 A1 relates to an encapsulating machine.

The coffee capsule is a small rigid container made of metal or plastic material, containing coffee, and is the most common form of coffee, and can be sized for single or multi-portions.

Coffee capsules are typically used in a non-removable container on the brewing device and consist of an outer ring or rim that remains dry during use, allowing removal and disposal without the user's hands getting wet or sticky.

Unlike paper coffee pods which have the advantage of being a fully biodegradable product that can decompose naturally, plastic and metal capsules are not recyclable, in particular requiring an additional process to separate the plastic/metal container from the organic waste products.

It should also be pointed out that powdered coffee loses its aroma and freshness within a month of being ground, and the capsules available on the market take between 2 months and a year to reach the end customer, meaning that the coffee we drink is devoid of its characteristic aroma.

The production of coffee capsules is a rather complex process requiring the use of complex industrial machinery of large size and weight, with costs that make them exclusive only to the giants of the coffee market, whereas small players such as roasters, shops, bars, restaurants and small businesses, do not have the possibility of producing coffee capsules themselves; the high costs are justified by the need to include in the encapsulation process measures that guarantee the quality of the final product.

The few examples of compact and small machines suitable for encapsulating coffee have several technical and quality limitations, such as not using a vacuum or not introducing an inert gas during the encapsulation phase: this compromises the fragrance of the coffee, which translates into a significant loss in quality compared to capsules produced by expensive industrial machines. Another technical limitation is the standard thermal welding between the edges of the capsule containing the ground coffee and the closure system, which does not guarantee an adequate production speed and significantly affects the quality of the final capsule.

Known technical solutions are therefore not able to ensure that small producers and roasters can produce top-quality coffee capsules due to the limitations mentioned above, to which we can also add the lack of freedom to customize coffee blends, as well as to preserve local blends and their aroma and provide fresh coffee capsules.

The main disadvantage of the Known Art is therefore cumbersome and expensive complex machinery, designed for use by large companies and lacking the possibility of use for small producers.

The object of the present invention is to solve the above-mentioned problems of prior art by means of a compact encapsulating machine for coffee beans, capable of ensuring quality levels fully comparable to those of an expensive and bulky industrial machine, and which can be used by small coffee sellers, specialty shops, coffee bars and roasters to serve fresh coffee, and to encourage the use of local blends.

Another aim concerns the inclusion of steps in the production process that ensure the quality and goodness of the final product, namely:

- the introduction of an inert gas (nitrogen) to prevent oxidation of the ground coffee and so as not to compromise the fragrance of the freshly encapsulated coffee;
- the introduction of ultrasonic welding in place of standard thermal welding to ensure a higher production speed and also allow the use of biodegradable/compostable materials for the capsules.

The aforementioned and other purposes and advantages of the invention, as will result from the following description, are achieved by a compact encapsulating machine for coffee beans such as that described in claim 1.

Preferred embodiments and non-trivial variants of the present invention form the subject matter of the dependent claims.

It is understood that all attached claims form an integral part of this description.

It will be immediately obvious that one can make numerous variations and modifications to what is described (e.g. relating to shape, dimensions, arrangements and parts with equivalent functionality) without departing from the scope of protection of the invention as it appears from the appended claims.

The present invention will be best described by certain preferred embodiments, provided by way of example but not limitation, with reference to the accompanying drawings, wherein:

- FIG. 1 shows the compact encapsulating machine for coffee beans (100) according to the present invention;
- FIG. 2 shows the capsule sorter (200) according to the present invention;
- FIG. 3 shows the system for grinding-metering and injecting an inert gas (300) according to the present invention;

- FIG. 3a shows the inert gas delivery system (305) and the coffee powder stirring system (306) according to the present invention;
- FIG. 4 shows the capsule closure system (400) according to the present invention;
- FIG. 4a shows the system for injecting the second dose of inert gas (406), according to the present invention.
- FIG. 4b shows the vacuum suction system (403) for sealing films according to the present invention.
- FIG. 5 shows the ultrasonic sealing system (500) according to the present invention.
- FIG. 6 shows the capsule ejection system (600) according to the present invention.
- FIG. 7 shows the rotary station (700) according to the present invention.

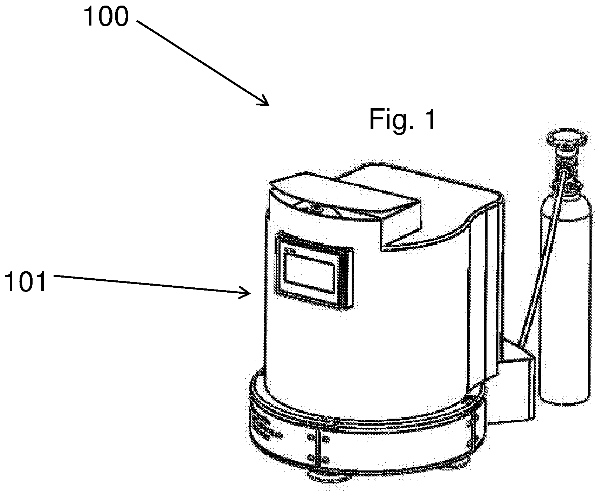

The compact encapsulating machine for coffee beans (100) is designed to produce biodegradable coffee capsules from roasted coffee beans. It is able to operate fully automatically in a small space and can therefore be used by small players in the coffee market, such as roasters, shops, bars, restaurants and small businesses, who do not have the possibility of producing coffee capsules themselves, as well as being able to ensure quality levels fully comparable to those of an expensive and bulky industrial machine, as can be seen in FIG. 1.

It comprises a capsule sorter (200), designed to contain and convey the capsules (201) in a seat (701) of a rotating station (700), a grinding-metering and injection system of an inert gas (300), designed to grind the coffee beans and direct the coffee powder into said capsules (201) previously filled with an inert gas, a capsule closure system (400) designed for positioning the film of said capsules (201) previously filled with coffee powder and inhaling an inert gas before sealing, an ultrasonic sealing system (500) designed to ensure the tightness and repeatability of the closing process of said capsules (201) and a capsule expulsion system (600), designed to contain and convey the escape of said capsules (201).

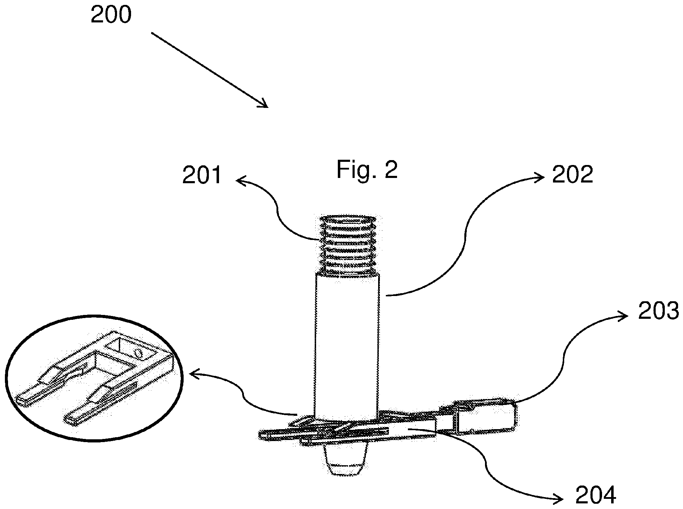

Advantageously, as can be seen from FIG. 2, said capsule selector (200), connected to a rotating station (700), consists of a container of biodegradable capsules (202) and an actuator (203), connected to a pusher (204), designed to administer a linear movement back and forth to said pusher (204) adapted to convey said capsule (201) from said container (202) into a seat (701) of said rotating station (700), said pusher (204) shaped as a "U" necessary to facilitate the placement of said capsules (201) in a seat (701) of said rotating station (700) and the subsequent positioning of said capsules (201) from said capsule container (202) in said pusher (204).

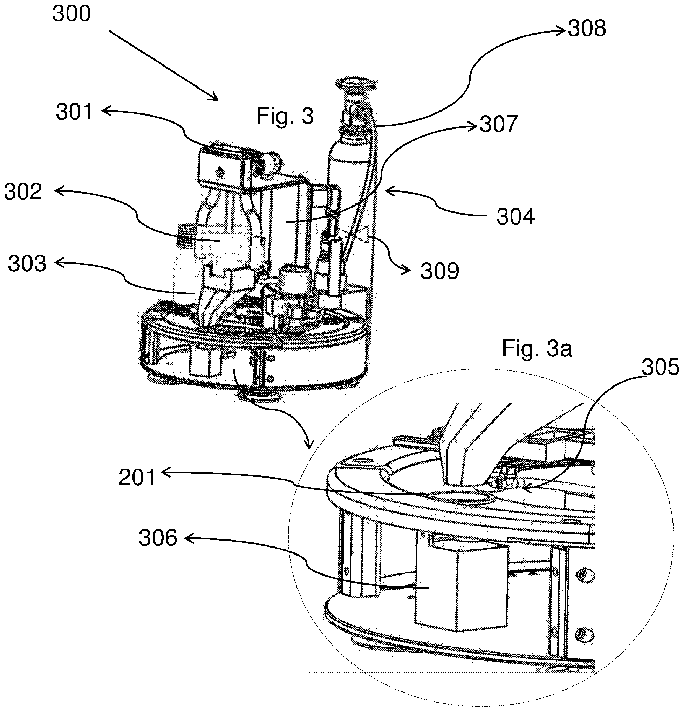

The compact encapsulating machine for coffee beans (100) is provided with a grinder-metering and injection system of an inert gas (300), as shown in FIG. 3, which is necessary to provide fresh coffee capsules after grinding the coffee beans prior to the encapsulation process, as well as to allow customization and selection of blends in a capsule free from oxidation by external agents; said grinder-metering and injection system of an inert gas (300) consisting of a grinder (302) suitable for containing and grinding the coffee beans, said grinder (302) being cylindrical in shape with a system of metal and/or ceramic blades or other material necessary for the grinding process, and equipped with a grinding regulator necessary to vary the granulometry and/or size of the coffee powder, actuated by an actuator (301) of electrical and/or hydraulic and/or piezoelectric and/or electroactive polymeric base and/or electromagnetic type connected thereto, and by a dispenser (303) able to introduce a specific dose of coffee powder into said capsule (201) a specific dose of coffee powder which may vary from 5 to 7 grams for a single dose, or may be customized according to use or demand, said actuator (301) connected to the upper part of a bracket (307), said metering device (303) connected to the lower part of said bracket (307).

Furthermore, said grinding-metering and injection system of an inert gas (300) being provided with an inert gas container (304) able to introduce in said capsule (201) a quantity of inert gas necessary to avoid oxidation of the coffee powder, by means of a gas nozzle (305) connected to said dispenser (303): this process is essential since ground coffee is hygroscopic and in the event of contact with the air it is subject to oxidation due to the humidity and oxygen present in the atmosphere, which impoverishes and degrades the blend, i.e. the oxygen causes oxidation of the aromatic substances and especially of the fatty and oily ones, with consequent rancidity of the product.

In addition, said grinding-metering and inert gas injection system (300) is provided with an agitator (306) adapted to prevent the formation of asymmetrical volumes of powder in said capsule (201) during the filling of coffee powder, said container of inert gas (304) operatively connected to said compact encapsulating machine for coffee beans (100) by means of a tube (308), said stirrer (306) connected to the lower part of said capsule (201), as evidenced by FIG. 3a.

The system for grinding-metering and injecting an inert gas (300) is also provided with a solenoid valve (309) connected to said nozzle for gas (305) and to said container of inert gas (304), said solenoid valve adapted to activate the introduction of gas into said capsule (201) necessary to prevent formation of oxides inside said capsule (201), said solenoid valve managed by an HMI man-machine interface (101).

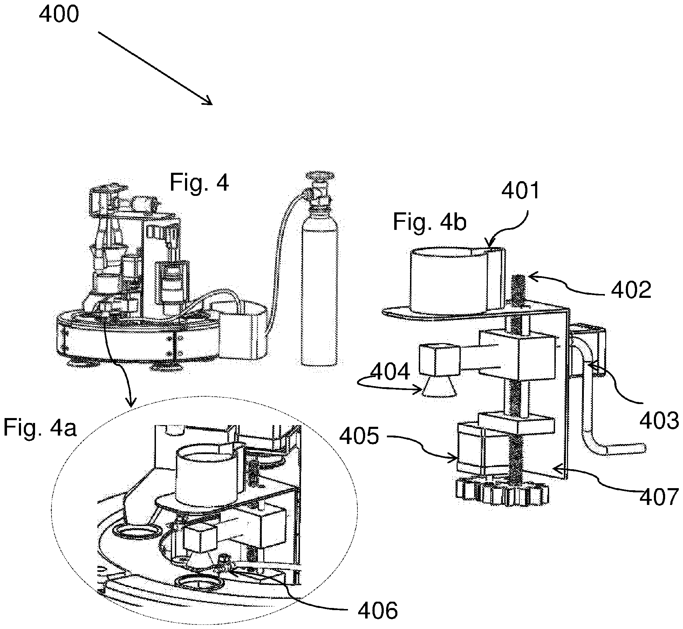

Referring to FIGG. 4 and 4b, the compact encapsulating machine for coffee beans (100) is provided with a capsule closed system (400) consisting of a sealing film collector (401) connected to the upper part of a bracket (407) by means of a nut screw (402) connected therein, said sealing film collector (401) necessary to seal said capsules (201) filled with coffee powder through a linear actuator (405) and/or electrical and/or hydraulic and/or piezoelectric and/or electroactive polymer-based and/or electromagnetic actuator, adapted to direct the bearings in a linear movement along said nut screw (402), said linear actuator (405) connected to the base of said bracket (407).

Moreover, said capsule closed system (400) being provided with a suction cup (404), connected to said nut screw (402) and operated by said linear actuator (405), said suction cup (404) necessary to withdraw the sealing films from said sealing film collector (401) with the aid of a vacuum suction system (403), connected to the rear part of said bracket (407), and place them on said capsules (201) filled with coffee powder, after injecting a second dose of inert gas by means of a nozzle (406) operated by said solenoid valve (309) necessary to prevent formation of oxides inside said capsule (201), said nozzle (406) connected to the lower part of said bracket (407) and said solenoid valve (309) managed by an HMI man-machine interface (101), as evidenced by FIG. 4a.

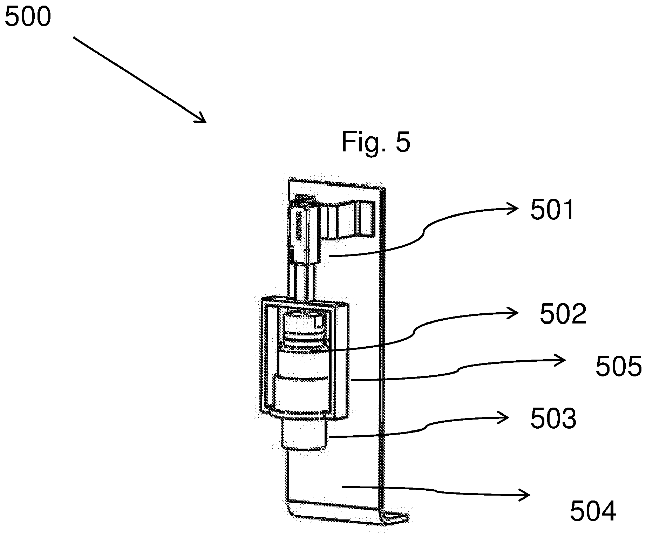

With reference to FIG. 5, the compact encapsulating machine for coffee beans (100) is provided with an ultrasonic sealing system (500) consisting of a linear actuator (501), connected to a bracket (504) and to an ultrasonic transducer (502) operatively connected to a support (505), said ultrasonic transducer (502) adapted to seal said capsules (201) filled with coffee powder by transmitting the vibratory energy to a welding base or horn (503), connected to said ultrasonic transducer (502), said welding base or horn (503) necessary to increase the amplitude of the mechanical vibrations and to transmit the vibrational energy to said capsules (201).

The linear actuator (501) converts low-voltage electricity at 120-240 V into high-frequency (20-40 kHz), high-voltage (13 kV) electrical energy; the electrical current then enters the transducers, which contain piezoelectric ceramic crystals that expand and contract when excited by the electrical energy being converted into mechanical energy, and the transducer expands and contracts at the frequency of the crystals.

The ultrasonic transducer (502) then transmits the vibratory energy to said welding base or horn (503) made of aluminum and required to further increase the amplitude of the mechanical vibrations.

The induced vibrations generate heat at the junction interface between the coffee capsule (201) and the cover to be welded, resulting in melting of the biodegradable materials and formation of the weld after cooling, in a time of about 3s.

The ultrasonic sealing system (500) is advantageously provided with welding base or horn (503) made to connect to said sealing films and said capsules (201), and designed by calculating the resonance length of said sealing base or horn (503) from the formula derived from Webster's equation:

$$\partial^2(x,t)/\partial x^2 + \partial u(x,t)/\partial x \; (\partial/\partial x \; (\ln S_x)) = 1/c^2 \; (\partial^2 u(x,t)/\partial t^2)$$

and on the basis of frequency analysis such as modal analysis and natural frequency; the resonance length is equal to half the wavelength of the system.

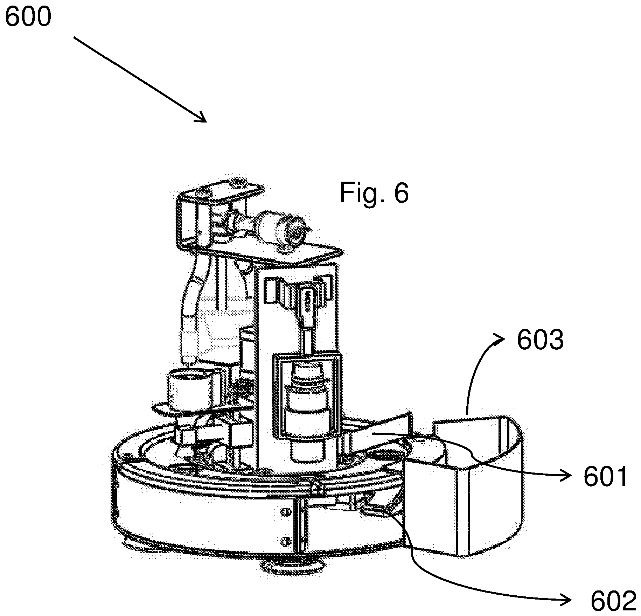

The compact encapsulating machine for coffee beans (100) is provided with a said capsule ejection system (600) consists of a lifting device (602) necessary to imprint and an upward force to lift said capsule (201) from a seat (701), from an ejection device (601) designed to impart a displacement force to said capsule (201) and convey it towards a container device (603) adapted to collect said capsules (201), said lifting device (602), ejection device (601) and container device (603) operatively connected to a rotating station (700), as evidenced by FIG. 6.

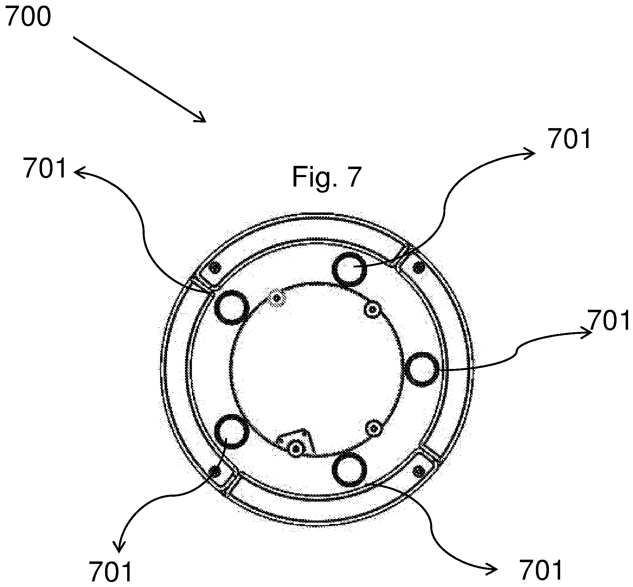

In addition, said elements constituting said compact encapsulating machine for coffee beans (100), that is, said capsule sorter (200), said grinding-metering system and injection of an inert gas (300), said capsule closed system (400), said ultrasonic sealing system (500) and said capsule ejection system (600), are operatively connected to said rotating station (700) designed with 5 seat (701) suitable to contain said capsules (201) and to move them to the subsequent systems during the encapsulation phases of said capsules (201), as shown in FIG. 7.

Advantageously, said compact encapsulating machine for coffee beans (100), is provided with a human-machine interface HMI (101), comprising a control panel (101), touch screen or manual, designed to manage capsule presence, distance and load cell sensors, positioned in said rotating station (700), said sensors required to send immediate feedback inherent in the status of the process to an operator, said control panel (101) positioned in the upper surface of said compact encapsulating machine for coffee beans (100), said control panel (101) designed to manage the solenoid valve (309).

Further, said human-machine interface HMI (101) is designed to manage on/off settings, setting of coffee grind size in said grinder (301), setting of desired coffee weight in said capsule (201), setting of desired raking/leveling using said agitator (306), changing capsules with different adapters, changing of sealing mechanism with ultrasound and/or heat, setting of number of capsules required in a cycle.

With reference to the figures of the present invention, said compact encapsulating machine for coffee beans (100) is capable of making ground coffee capsules according to the following steps:

- selecting said capsules (201) by moving from said capsule selector (200) into a seat (701) of said rotating station (700);
- grinding coffee beans and dosing coffee powder and inhaling an inert gas in said capsules (201) after rotation of said seat (701) in said rotating station (700) in the direction of the grinder-dosing and injection system an inert gas (300);
- positioning sealing films from a sealing film collector (401) into said capsules (201) after rotation of said seat (701) in said rotating station (700) in the direction of said capsule closing system (400) and inhaling a second dose of inert gas;

- sealing said sealing films in said capsules (201) by means of an ultrasonic sealing system (500), after rotating said seat (701) in said rotating station (700) in the direction of said ultrasonic sealing system (500);
- expelling said capsules (201) into said container (603), after rotation of said seat (701) in said rotating station (700) in the direction of said capsule ejection system (600).

**Claims**

1. Compact encapsulating machine for coffee beans (100) comprising:

- a capsule selector (200), designed to contain and convey the capsules (201) in a seat (701) of a rotating station (700);
- a grinding-metering and injection system of an inert gas (300), designed to grind the coffee beans and direct the coffee powder into said capsules (201) previously filled with an inert gas;
- a capsule closure system (400) designed for positioning the film of said capsules (201) previously filled with coffee powder and inhaling an inert gas before sealing;
- an ultrasonic sealing system (500) designed to ensure the tightness and repeatability of the closing process of said capsules (201); and
- a capsule expulsion system (600), designed to contain and convey the escape of said capsules (201) ;

**characterized in that** said capsule selector (200), connected to a rotating station (700), consists of a container of biodegradable capsules (202) and an actuator (203), connected to a pusher (204), designed to administer a linear movement back and forth to said pusher (204) adapted to convey said capsule (201) from said container (202) into a seat (701) of said rotating station (700), said pusher (204) shaped as a "U" necessary to facilitate the placement of said capsules (201) in a seat (701) of said rotating station (700) and the subsequent positioning of said capsules (201) from said capsule container (202) in said pusher (204), said grinder-metering and injection system of an inert gas (300) consisting of a grinder (302) suitable for containing and grinding the coffee beans, said grinder (302) equipped with a grinding regulator necessary to vary the granulometry and/or size of the coffee powder, act activated by an actuator (301) connected therein, and by a dispenser (303) able to introduce a specific dose of coffee powder into said capsule (201), said actuator (301) connected to the upper part of a bracket (307), said metering device (303) connected to the lower part of said bracket (307), said grinding-metering and injection system of an inert gas (300) being provided with an inert gas container (304) able to introduce in said capsule (201) a quantity of inert gas necessary to avoid oxidation of the coffee powder, by means of a gas nozzle (305) connected to said dispenser (303), and of an agitator (306) adapted to prevent the formation of asymmetrical volumes of powder in said capsule (201) during the filling of coffee powder, said container of inert gas (304) operatively connected to said compact encapsulating machine for coffee beans (100) by means of a tube (308), said stirrer (306) connected to the lower part of said capsule (201), said grinding-metering system and injection of an inert gas (300) is provided with a solenoid valve (309) connected to said nozzle for gas (305) and to said container of inert gas (304), said solenoid valve adapted to activate the introduction of gas into said capsule (201) necessary to prevent formation of oxides inside said capsule (201), said solenoid valve managed by an HMI man-machine interface (101), said capsule closing system (400)consisting of a sealing film collector (401) connected to the upper part of a bracket (407) by means of a nut screw (402) connected therein, said sealing film collector (401) necessary to seal said capsules (201) filled with coffee powder through a linear actuator (405) adapted to direct the bearings in a linear movement along said nut screw (402), said linear actuator (405) connected to the base of said bracket (407), said capsule closing system (400) being provided with a suction cup (404), connected to said nut screw (402) and operated by said linear actuator (405), said suction cup (404) necessary to withdraw the sealing films from said sealing film collector (401) with the aid of a vacuum suction system (403), connected to the rear part of said bracket (407), and place them on said capsules (201) filled with coffee powder, after injecting a second dose of inert gas by means of a nozzle (406) operated by said solenoid valve (309) necessary to prevent formation of oxides inside said capsule (201), said nozzle (406) connected to the lower part of said bracket (407) and said solenoid valve (309) managed by an HMI man-machine interface (101), said ultrasonic sealing system (500) consisting of a linear actuator (501), connected to a bracket (504) and to an ultrasonic transducer (502) operatively connected to a support (505), said ultrasonic transducer (502) adapted to seal said capsules (201) filled with coffee powder by transmitting the vibratory energy to a welding base or horn (503), connected to said ultrasonic transducer (502), said welding base or horn (503) necessary to increase the amplitude of the mechanical vibrations and to transmit the vibrational energy to said capsules (201), said ultrasonic sealing system (500) being provided with said welding base or horn (503) made to connect to said sealing films and said capsules (201) and designed according to Webster's equation and on frequency analysis, said capsule ejection system (600) consists of a lifting device (602) necessary to imprint and an upward force to lift said capsule (201) from a seat (701), from an ejection device (601) designed to impart a displacement force to said capsule (201) and convey it towards a container device (603) adapted to collect said capsules (201), said lifting device (602), ejection device (601) and container device (603) operatively connected to a rotating station (700).

2. Compact encapsulating machine for coffee beans (100) according to claim 1, **characterized in that** said:

- capsule selector (200),
- grinder-metering and injection system of an inert gas (300),
- capsule closing system (400),
- ultrasonic sealing system (500),
- capsule ejection system (600),

are operationally connected to said rotating station (700) designed with 5 seats (701) adapted to contain said capsules (201) and to move them into subsequent systems during the encapsulation steps of said capsules (201).

3. Compact encapsulating machine for coffee beans (100), according to claim 1, **characterized in that** said HMI man-machine interface (101) consist of a control panel (101) designed to manage the capsule presence, distance and load cell sensors, positioned in said rotating station (700), said necessary sensors to send immediate feedback concerning the status of the process to an operator, said control panel (101) positioned in the upper surface of said compact encapsulating machine for coffee beans (100), said control panel (101) designed to manage the solenoid valve (309), said human-machine interface HMI (101) being designed to manage the on/off settings, setting the size of the coffee grind in said grinder (301), setting the desired coffee weight in said capsule (201), setting the desired raking/levelling by means of said stirrer (306), replacing the capsules with different adapters, replacing the sealing mechanism Ultrasound and/or heat shaping, setting the number of capsules required in a cycle.

4. Method for making coffee capsules (201) with the aid of said compact encapsulating machine for coffee beans (100) according to claim 1, said method comprising the steps of:

- selecting said capsules (201) by moving from said capsule selector (200) into a seat (701) of said rotating station (700);
- grinding coffee beans and dosing coffee powder and inhaling an inert gas in said capsules (201) after rotation of said seat (701) in said rotating station (700) in the direction of the grinding-metering and injection system an inert gas (300);
- positioning sealing films from a sealing film collector (401) into said capsules (201) after rotation of said seat (701) in said rotating station (700) in the direction of said capsule closing system (400) and inhaling a second dose of inert gas;
- sealing said sealing films in said capsules (201) by means of an ultrasonic sealing system (500), after rotating said seat (701) in said rotating station (700) in the direction of said ultrasonic sealing system (500);
- expelling said capsules (201) into said container (603), after rotation of said seat (701) in said rotating station (700) in the direction of said capsule ejection system (600).

**Patentansprüche**

1. Kompakte Kapselmaschine für Kaffeebohnen (100), umfassend:

- eine Kapselauswahlvorrichtung (200), die dazu ausgelegt ist, die Kapseln (201) in einem Sitz (701) einer Drehstation (700) aufzunehmen und zu befördern;
- ein Mahl-, Dosier- und Einspritzsystem für Inertgas (300), das dazu ausgelegt ist, die Kaffeebohnen zu mahlen und das Kaffeepulver in die zuvor mit Inertgas gefüllten Kapseln (201) zu leiten;
- ein Kapselverschlusssystem (400), das dazu ausgelegt ist, die Folie der zuvor mit Kaffeepulver gefüllten Kapseln (201) zu positionieren und vor dem Versiegeln ein Inertgas einzuleiten;
- ein Ultraschall-Versiegelungssystem (500), das dazu ausgelegt ist, die Dichtheit und Wiederholbarkeit des Verschlussvorgangs der Kapseln (201) sicherzustellen; und
- ein Kapselausstoßsystem (600), das dazu ausgelegt ist, die Kapseln (201) aufzunehmen und den Ausstoß der Kapseln (201) zu steuern;

**dadurch gekennzeichnet, dass** die Kapselauswahlvorrichtung (200), die mit einer Drehstation (700) verbunden ist, aus einem Behälter für biologisch abbaubare Kapseln (202) und einem Aktuator (203) besteht, der mit einem Schieber (204) verbunden ist, der dazu ausgelegt ist, eine lineare Hin- und Herbewegung auszuführen, um die Kapseln (201) aus dem Behälter (202) in einen Sitz (701) der Drehstation (700) zu transportieren; wobei der Schieber (204) eine "U"-Form hat, die notwendig ist, um die Kapseln (201) in einem Sitz (701) der Drehstation (700) zu platzieren und anschließend die Kapseln (201) aus dem Behälter für Kapseln (202) in den Schieber (204) zu positionieren;

wobei das Mahl-, Dosier- und Einspritzsystem für Inertgas (300) aus einem Mahlwerk (302) besteht, das dazu geeignet ist, die Kaffeebohnen aufzunehmen und zu mahlen;

wobei das Mahlwerk (302) mit einem Mahlgradregler ausgestattet ist, der notwendig ist, um die Partikelgröße und/oder die Granulometrie des Kaffeepulvers zu variieren, und von einem Aktuator (301) betrieben wird, der damit verbunden ist;

wobei ein Dosierer (303) vorgesehen ist, der in der Lage ist, eine spezifische Menge Kaffeepulver in die Kapsel (201) einzuführen; wobei der Aktuator (301) mit der oberen Seite einer Halterung (307) verbunden ist und der Dosierer (303) mit der unteren Seite derselben Halterung (307) verbunden ist;

wobei das Mahl-, Dosier- und Einspritzsystem für Inertgas (300) mit einem Inertgasbehälter (304) ausgestattet ist, der in der Lage ist, eine Menge Inertgas in die Kapsel (201) einzuleiten, die notwendig ist, um die Oxidation des Kaffeepulvers zu verhindern;

wobei dies über eine Gasdüse (305) geschieht, die mit dem Dosierer (303) verbunden ist, und über einen Rührer (306), der dazu geeignet ist, die Bildung asymmetrischer Pulvervolumen in der Kapsel (201) während des Befüllens zu verhindern; wobei der Inertgasbehälter (304) operativ mit der kompakten Kapselmaschine für Kaffeebohnen (100) über ein Rohr (308) verbunden ist, der Rührer (306) mit der unteren Seite der Kapsel (201) verbunden ist, das Mahl-, Dosier- und Einspritzsystem für Inertgas (300) mit einem Magnetventil (309) ausgestattet ist, das mit der Gasdüse (305) und dem Inertgasbehälter (304) verbunden ist; wobei das Magnetventil dazu geeignet ist, die Gaszufuhr in die Kapsel (201) zu aktivieren, die notwendig ist, um die Bildung von Oxiden innerhalb der Kapsel (201) zu verhindern; wobei das Magnetventil durch eine Mensch-Maschine-Schnittstelle (HMI) (101) gesteuert wird; wobei das Kapselverschlusssystem (400) aus einem Sammelbehälter für Versiegelungsfolien (401) besteht, der mit der oberen Seite einer Halterung (407) durch eine Muttergewindeschraube (402) verbunden ist; wobei der Sammelbehälter für Versiegelungsfolien (401) notwendig ist, um die Kapseln (201), die mit Kaffeepulver gefüllt sind, zu versiegeln, und ein Linearaktor (405) vorgesehen ist, der die Lager in einer linearen Bewegung entlang der Muttergewindeschraube (402) führt; wobei der Linearaktor (405) mit der Basis der Halterung (407) verbunden ist, eine Saugnapfvorrichtung (404), die mit der Muttergewindeschraube (402) verbunden und vom Linearaktor (405) betrieben wird, vorgesehen ist; wobei die Saugnapfvorrichtung (404) notwendig ist, um die Versiegelungsfolien aus dem Sammelbehälter für Versiegelungsfolien (401) mit Hilfe eines Vakuumsystems (403), das mit der Rückseite der Halterung (407) verbunden ist, zu entnehmen und sie auf die mit Kaffeepulver gefüllten Kapseln (201) zu platzieren;

nachdem eine zweite Dosis Inertgas mittels einer Düse (406) eingespritzt wurde, die vom Magnetventil (309) aktiviert wird und notwendig ist, um die Bildung von Oxiden innerhalb der Kapsel (201) zu verhindern;

wobei die Düse (406) mit der unteren Seite der Halterung (407) verbunden ist und das Magnetventil (309) durch die Mensch-Maschine-Schnittstelle (HMI) (101) gesteuert wird;

wobei das Ultraschall-Versiegelungssystem (500) aus einem Linearaktor (501) besteht, der mit einer Halterung (504) verbunden ist und mit einem Ultraschallwandler (502) verbunden ist,

wobei der Ultraschallwandler (502) operativ mit einem Stützelement (505) verbunden ist und dazu geeignet ist, die mit Kaffeepulver gefüllten Kapseln (201) zu versiegeln, indem er die Vibrationsenergie auf eine Schweißbasis oder ein Horn (503) überträgt;

wobei die Schweißbasis oder das Horn (503), die mit dem Ultraschallwandler (502) verbunden ist, notwendig ist, um die Amplitude der mechanischen Schwingungen zu erhöhen und die Vibrationsenergie auf die Kapseln (201) zu übertragen;

wobei das Ultraschall-Versiegelungssystem (500) mit der Schweißbasis oder dem Horn (503) ausgestattet ist, die für die Verbindung mit den Versiegelungsfolien und den Kapseln (201) ausgelegt ist und gemäß der Webster-Gleichung und einer Frequenzanalyse entworfen wurde;

wobei das Kapselausstoßsystem (600) aus einer Hebevorrichtung (602) besteht, die notwendig ist, um eine Aufwärtskraft zu erzeugen, um die Kapsel (201) aus einem Sitz (701) anzuheben, und aus einer Ausstoßvorrichtung (601), die dazu ausgelegt ist, eine Verschiebekraft auf die Kapsel (201) auszuüben und sie zu einem Auffangbehälter (603) zu transportieren;

wobei die Hebevorrichtung (602), die Ausstoßvorrichtung (601) und der Auffangbehälter (603) operativ mit einer Drehstation (700) verbunden sind.

**2.** Kompakte Kapselmaschine für Kaffeebohnen (100) nach Anspruch 1, **dadurch gekennzeichnet, dass**:

- die Kapselauswahlvorrichtung (200),
- das Mahl-, Dosier- und Einspritzsystem für Inertgas (300),
- das Kapselverschlusssystem (400),
- das Ultraschall-Versiegelungssystem (500),
- das Kapselausstoßsystem (600), betriebsmäßig mit der Drehstation (700) verbunden sind, die mit 5 Sitzen (701) ausgestattet ist, die dazu geeignet sind, die Kapseln (201) aufzunehmen und sie während der Kapselungsschritte in nachfolgende Systeme zu bewegen.

**3.** Kompakte Kapselmaschine für Kaffeebohnen (100) nach Anspruch 1, **dadurch gekennzeichnet, dass**:

- die Mensch-Maschine-Schnittstelle (HMI) (101) aus einem Bedienfeld (101) besteht, das zur Steuerung der Kapselpräsenz-, Abstands- und Lastzellensensoren in der Drehstation (700) ausgelegt ist,
- wobei die erforderlichen Sensoren eine sofortige Rückmeldung über den Status des Prozesses an einen Bediener senden, wobei das Bedienfeld (101) in der oberen Oberfläche der kompakten Kapselmaschine für Kaffeebohnen (100) angeordnet ist,
- das Bedienfeld (101) zur Steuerung des Magnetventils (309) ausgelegt ist,
- wobei die Mensch-Maschine-Schnittstelle (HMI) (101) zur Steuerung der folgenden Parameter ausgelegt ist:

- Ein-/Ausschaltfunktionen,
- Einstellung der Mahlgradgröße im Mahlwerk (301),
- Einstellung des gewünschten Kaffeepulvergewichts in der Kapsel (201),
- Einstellung des gewünschten Rake-/Nivellierprozesses durch den Rührer (306),
- Austausch der Kapseln durch verschiedene Adapter,
- Austausch des Versiegelungsmechanismus durch Ultraschall- und/oder Wärmesiegelung,
- Einstellung der Anzahl der in einem Zyklus benötigten Kapseln.

**4.** Verfahren zur Herstellung von Kaffeekapseln (201) mit Hilfe der kompakten Kapselmaschine für Kaffeebohnen (100) nach Anspruch 1, wobei das Verfahren die folgenden Schritte umfasst:

- Auswahl der Kapseln (201) durch Bewegung der Kapselauswahlvorrichtung (200) in einen Sitz (701) der Drehstation (700);
- Mahlen der Kaffeebohnen, Dosieren des Kaffeepulvers und Einleiten eines Inertgases in die Kapseln (201) nach Drehung des Sitzes (701) in der Drehstation (700) in Richtung des Mahl-, Dosier- und Einspritzsystems für Inertgas (300);
- Positionierung von Versiegelungsfolien aus einem Versiegelungsfoliensammler (401) in die Kapseln (201) nach Drehung des Sitzes (701) in der Drehstation (700) in Richtung des Kapselverschlusssystems (400) und Einleiten einer zweiten Dosis Inertgas;
- Versiegelung der Versiegelungsfolien in den Kapseln (201) mittels eines Ultraschall-Versiegelungssystems (500) nach Drehung des Sitzes (701) in der Drehstation (700) in Richtung des Ultraschall-Versiegelungssystems (500);
- Ausstoß der Kapseln (201) in einen Behälter (603) nach Drehung des Sitzes (701) in der Drehstation (700) in Richtung des Kapselausstoßsystems (600).

**Revendications**

**1.** Machine d'encapsulation compacte pour grains de café (100) comprenant :

- un sélecteur de capsules (200), conçu pour contenir et transporter les capsules (201) dans un siège (701) d'une station rotative (700) ;
- un système de broyage-dosage et d'injection d'un gaz inerte (300), conçu pour broyer les grains de café et diriger la poudre de café dans lesdites capsules (201) préalablement remplies de gaz inerte ;
- un système de fermeture de capsules (400), conçu pour positionner le film desdites capsules (201) préalablement remplies de poudre de café et inhalant un gaz inerte avant le scellage ;
- un système de scellage par ultrasons (500), conçu pour assurer l'étanchéité et la répétabilité du processus de fermeture desdites capsules (201) ; et

- un système d'expulsion de capsules (600), conçu pour contenir et acheminer la fuite desdites capsules (201) ;

**caractérisée en ce que** ledit sélecteur de capsules (200), relié à une station rotative (700), est constitué d'un conteneur de capsules biodégradables (202) et d'un actionneur (203), relié à un poussoir (204), conçu pour administrer un mouvement linéaire de va-et-vient audit poussoir (204) adapté pour transporter ladite capsule (201) dudit récipient (202) dans un siège (701) de ladite station rotative (700), ledit poussoir (204) ayant la forme d'un « U » nécessaire pour faciliter le placement desdites capsules (201) dans un siège (701) de ladite station rotative (700) et le positionnement ultérieur desdites capsules (201) dudit récipient à capsules (202) dans ledit poussoir (204), ledit système de broyage-dosage et d'injection d'un gaz inerte (300) étant constitué d'un broyeur (302) apte à contenir et à moudre les grains de café, ledit broyeur (302) étant équipé d'un régulateur de mouture nécessaire pour faire varier la granulométrie et/ou la taille de la poudre de café, actionné par un actionneur (301) qui y est connecté, et par un distributeur (303) capable d'introduire une dose spécifique de poudre de café dans ladite capsule (201), ledit actionneur (301) étant connecté à la partie supérieure d'un support (307), ledit dispositif de dosage (303) relié à la partie inférieure dudit support (307), ledit système de broyage-dosage et d'injection d'un gaz inerte (300) étant pourvu d'un récipient de gaz inerte (304) apte à introduire dans ladite capsule (201) une quantité de gaz inerte nécessaire pour éviter l'oxydation de la poudre de café, au moyen d'une buse de gaz (305) reliée audit distributeur (303), et d'un agitateur (306) adapté pour empêcher la formation de volumes asymétriques de poudre dans ladite capsule (201) pendant le remplissage de poudre de café, ledit récipient de gaz inerte (304) étant relié de manière opérationnelle à ladite machine d'encapsulation compacte pour grains de café (100) au moyen d'un tube (308), ledit agitateur (306) étant relié à la partie inférieure de ladite capsule (201), ledit système de broyage-dosage et d'injection d'un gaz inerte (300) étant pourvu d'une électrovanne (309) reliée à ladite buse de gaz (305) et audit récipient de gaz inerte (304), ladite électrovanne étant adaptée pour activer l'introduction de gaz dans ladite capsule (201) nécessaire pour empêcher la formation d'oxydes à l'intérieur de ladite capsule (201), ladite électrovanne étant gérée par une interface homme-machine IHM (101), ledit système de fermeture de capsules (400) étant constitué d'un collecteur de film d'étanchéité (401) relié à la partie supérieure d'un support (407) au moyen d'une vis à écrou (402) reliée à celui-ci, ledit collecteur de film d'étanchéité (401) nécessaire pour sceller lesdites capsules (201) remplies de poudre de café par l'intermédiaire d'un actionneur linéaire (405) adapté pour diriger les roulements dans un mouvement linéaire le long de ladite vis à écrou (402), ledit actionneur linéaire (405) étant relié à la base dudit support (407), ledit système de fermeture de capsules (400) étant pourvu d'une ventouse (404), reliée à ladite vis à écrou (402) et actionnée par ledit actionneur linéaire (405), ladite ventouse (404) étant nécessaire pour retirer les films d'étanchéité dudit collecteur de film d'étanchéité (401) avec l'aide d'un système d'aspiration sous vide (403), relié à la partie arrière dudit support (407), et les placer sur lesdites capsules (201) remplies de poudre de café, après l'injection d'une seconde dose de gaz inerte au moyen d'une buse (406) actionnée par ladite électrovanne (309) nécessaire pour empêcher la formation d'oxydes à l'intérieur de ladite capsule (201), ladite buse (406) étant reliée à la partie inférieure dudit support (407) et ladite électrovanne (309) étant gérée par une interface homme-machine IHM (101), ledit système de scellage par ultrasons (500) étant constitué d'un actionneur linéaire (501), relié à un support (504) et à un transducteur à ultrasons (502) connecté de manière opérationnelle à un support (505), ledit transducteur à ultrasons (502) étant adapté pour sceller lesdites capsules (201) remplies de poudre de café en transmettant l'énergie vibratoire à une base ou une corne de soudage (503), reliée audit transducteur à ultrasons (502), ladite base ou corne de soudage (503) étant nécessaire pour augmenter l'amplitude des vibrations mécaniques et pour transmettre l'énergie vibratoire auxdites capsules (201), ledit système de scellage par ultrasons (500) étant pourvu de ladite base ou corne de soudage (503) conçue pour se connecter auxdits films de scellage et auxdites capsules (201) et conçue selon l'équation de Webster et l'analyse de fréquence, ledit système d'éjection de capsules (600) étant constitué d'un dispositif de levage (602) nécessaire pour imprimer une force ascendante afin de soulever ladite capsule (201) d'un siège (701), d'un dispositif d'éjection (601) conçu pour appliquer une force de déplacement à ladite capsule (201) et la transporter vers un dispositif conteneur (603) conçu pour collecter lesdites capsules (201), lesdits dispositif de levage (602), dispositif d'éjection (601) et dispositif conteneur (603) étant reliés de manière opérationnelle à une station rotative (700).

2. Machine d'encapsulation compacte pour grains de café (100), selon la revendication 1, **caractérisée en ce que** :

   - le sélecteur de capsules (200),
   - le système de broyage-dosage et d'injection d'un gaz inerte (300),
   - le système de fermeture de capsules (400),
   - le système de scellage par ultrasons (500),
   - le système d'expulsion de capsules (600), sont connectés opérationnellement à ladite station rotative (700), conçue avec 5 sièges (701) adaptés pour contenir lesdites capsules (201) et pour les déplacer dans les systèmes suivants pendant les étapes d'encapsulation desdites capsules (201) .

**3.** Machine d'encapsulation compacte pour grains de café (100), selon la revendication 1, **caractérisée en ce que** ladite interface homme-machine IHM (101) est constituée d'un panneau de commande (101) conçu pour gérer :

- les capteurs de présence des capsules, de distance et de cellule de charge, positionnés dans ladite station rotative (700),
- lesdits capteurs nécessaires pour envoyer un retour immédiat sur l'état du processus à un opérateur,

ledit panneau de commande (101) étant positionné sur la surface supérieure de ladite machine d'encapsulation compacte pour grains de café (100), ledit panneau de commande (101) étant conçu pour gérer l'électrovanne (309), ladite interface homme-machine IHM (101) étant conçue pour gérer les paramètres suivants :

- les réglages marche/arrêt,
- la taille de la mouture de café dans ledit broyeur (301),
- le poids de café souhaité dans ladite capsule (201),
- le ratissage/nivellement souhaité au moyen dudit agitateur (306),
- le remplacement des capsules avec différents adaptateurs,
- le remplacement du mécanisme de scellage par ultrasons et/ou par chaleur,
- le nombre de capsules requis dans un cycle.

**4.** Procédé de fabrication de capsules (201) de café à l'aide de ladite machine d'encapsulation compacte pour grains de café (100) selon la revendication 1, ledit procédé comprenant les étapes suivantes :

- sélection desdites capsules (201) en les déplaçant depuis ledit sélecteur de capsules (200) dans un siège (701) de ladite station rotative (700) ;
- broyage des grains de café, dosage de la poudre de café et remplissage d'un gaz inerte dans lesdites capsules (201), après rotation dudit siège (701) dans ladite station rotative (700) en direction du système de broyage-dosage et d'injection d'un gaz inerte (300) ;
- positionnement de films d'étanchéité provenant d'un collecteur de films d'étanchéité (401) dans lesdites capsules (201), après rotation dudit siège (701) dans ladite station rotative (700) en direction dudit système de fermeture de capsules (400) et injection d'une seconde dose de gaz inerte ;
- scellage desdits films d'étanchéité dans lesdites capsules (201) au moyen d'un système de scellage par ultrasons (500), après rotation dudit siège (701) dans ladite station rotative (700) en direction dudit système de scellage par ultrasons (500) ;
- expulsion desdites capsules (201) dans ledit conteneur (603), après rotation dudit siège (701) dans ladite station rotative (700) en direction dudit système d'expulsion de capsules (600) .

100

Fig. 1

101

200

201 ← Fig. 2 → 202

203

204

300

308

301

Fig. 3

307

302

304

303

309

Fig. 3a

305

201

306

400

Fig. 4

Fig. 4b

401

402

404

403

405

407

Fig. 4a

406

500

## Fig. 5

501

502

505

503

504

600

Fig. 6

603

601

602

700

701

701

Fig. 7

701

701

701

**EP 4 330 141 B1**

**Patent documents cited in the description**

- WO 2016029355 A1